# DEMANDE DE BREVET EUROPEEN

(11) **EP 2 506 381 A1**
(43) Date de publication de la demande: **03.10.2012**
(21) Numéro de dépôt: 12354014.8
(22) Date de dépôt: 05.03.2012
(51) Int. Cl.: H02J 3/00, H02M 7/00

(54) **Procédé de réalisation d'une installation de conversion d'énergie électrique et installation obtenue par un tel procédé**

(30) Priorité: 11.03.2011 FR 1100751
(71) Demandeur: Schneider Electric Industries SAS, 92500 Rueil-Malmaison (FR)
(72) Inventeur: Moreau, Julien, 38050 Grnoble Cedex 09 (FR); Radu, Daniel, 38050 Grnoble Cedex 09 (FR)
(74) Mandataire: Tripodi, Paul

(57) **Abrégé**

Le procédé de réalisation d'une installation (1 ; 1' ; 1 ") de conversion d'énergie électrique de puissance, comprend les étapes suivantes :
- fournir au moins un premier élément fonctionnel (10) dans un premier contenant (4),
- disposer le premier contenant,
- fournir au moins un deuxième élément fonctionnel (11) dans un deuxième contenant (3 ;3'),
- disposer le deuxième contenant relativement au premier contenant,
- interfacer les au moins premier et deuxième contenants.

L'installation (1 ; 1' ; 1 ") de conversion d'un d'énergie électrique de puissance et obtenue par la mise en oeuvre du procédé de réalisation.

## Description

### DOMAINE TECHNIQUE

La présente invention concerne un procédé de réalisation d'une installation de conversion d'énergie électrique de puissance. Elle concerne également une installation de conversion d'énergie électrique de puissance obtenue par un tel procédé.

### ETAT DE LA TECHNIQUE

L'invention s'applique en particulier à l'alimentation en énergie électrique de navires à quai.

Les navires présentent, selon leur type, des équipements électriques fonctionnant en 50 ou en 60Hz. Ainsi, lorsqu'un navire est à quai et que son groupe électrogène est à l'arrêt, il faut disposer sur le quai d'une installation permettant l'alimentation électrique de ses équipements avec une source d'énergie électrique adéquate, à une fréquence de 50 Hz ou de 60 Hz..

Des moyens sont connus pour effectuer la conversion de fréquence lorsque nécessaire. On peut utiliser des convertisseurs de fréquence type groupe tournant comprenant un moteur et une génératrice, ou alternativement on peut utiliser des convertisseurs de fréquence type interrupteur statique en moyenne ou basse tension.

La difficulté réside, comme vu précédemment, dans les différentes caractéristiques électriques des réseaux utilisés sur les navires, notamment différentes fréquences, et dans les coûts de développement, de construction et de maintenance d'une telle installation.

De manière connue, les navires sont équipés de réseaux électriques basse tension. Aujourd'hui, les besoins en puissance électrique ont considérablement augmenté et les réseaux électriques mis en oeuvre sur les navires sont généralement du type moyenne tension. L'utilisation de la moyenne tension permet d'utiliser des câbles de sections moins importantes et de réduire les pertes énergétiques dans l'alimentation des réseaux des navires.

Les navires alimentés à quai requièrent des puissances importantes allant de 1 MVA jusqu'à 20MVA en fonction de leur type (vraquier, ferry, porte-conteneurs, paquebots, etc ...). En fonction du type de navire, on peut avoir besoin d'une conversion de fréquence, dans ce cas la problématique majeure est d'assurer un courant de court-circuit suffisant avec l'installation de conversion pour pouvoir garantir la sélectivité des protections, sur le quai et sur le bateau, en cas de court-circuit. Dans les solutions actuelles, où des convertisseurs statiques (semiconducteurs) sont utilisés, cette capacité est donnée seulement par les caractéristiques thermiques de l'interrupteur statique de puissance utilisé dans la conception de convertisseurs et elle n'est pas suffisante. Cette problématique est majeure pour les navires alimentés..

De plus, les navires requièrent une bonne continuité de l'alimentation en énergie électrique pendant qu'ils sont à quai. Selon le type de navire, les contraintes sont variables. Dans ce contexte, il est nécessaire de fournir des architectures d'installation capables de fournir un bon niveau de redondance et un bon niveau de continuité d'alimentation même après un défaut apparu dans l'installation.

Le marché visé est très disparate en termes de puissance nécessaire et les installations dépendent du type de navire que le port et/ou le quai accueille. Le port peut aussi choisir d'avoir une installation de conversion par navire accueilli, par quai, ou bien encore centralisée pour plusieurs quais. La difficulté est donc de proposer une solution optimisée quelque soit le niveau de puissance requis et d'être en mesure de proposer des installations de conversion de très forte puissance allant jusqu'à 20MVA.

De plus les puissances nécessaires dépendent des navires existants et de l'évolution de leur conception dans le futur. En effet, la tendance est à une augmentation de la taille des navires et de leur puissance installée. Il faut donc que l'installation de conversion électrique soit en mesure de s'adapter à ces évolutions en termes de puissance fournie. Lors de la réalisation de cette installation, il faut aussi engendrer le moins possible de désagrément au fonctionnement du port. La rapidité de réalisation et de mise en oeuvre de l'installation est donc primordiale.

II apparaît également important de pouvoir mettre à jour ou d'améliorer l'installation, notamment :
- d'augmenter la puissance de l'installation;
- de fournir un meilleur niveau de redondance et une meilleure continuité de la disponibilité de l'énergie ;
- d'améliorer la maintenance.

Habituellement, lorsque l'on souhaite créer une installation électrique de cette importance, de lourds travaux sont à prévoir : travaux de génie civil, construction des locaux électriques en fonction du besoin (souvent en béton) et l'installation de l'appareillage. Une mise en service est ensuite nécessaire sur site.

Alternativement, une autre option est de créer des postes électriques métalliques de très grande taille, pré-câblé l'ensemble des équipements, puis de les segmenter pour les transporter sur site par convois exceptionnelles et réaliser les raccordements sur place. Pour garantir l'évolutivité de l'installation, il faut prévoir, dès sa mise en place, de laisser des espaces disponibles pour les futures extensions de puissance.

Dans ces deux cas, ces projets nécessitent des études et mise en oeuvre relativement longues et lourdes.

### EXPOSE DE L'INVENTION

Un but de l'invention est de fournir un procédé de réalisation d'une installation de conversion d'énergie électrique de puissance permettant de remédier aux problèmes évoqués précédemment et améliorant les procédés connus de l'art antérieur. En particulier, l'invention propose un procédé de réalisation simple, économique et efficace permettant notamment de rendre l'installation de conversion évolutive, tout en assurant des niveaux de redondance et de disponibilité de l'énergie améliorés. L'invention porte encore sur une installation de conversion obtenue par la mise en oeuvre d'un tel procédé de réalisation.

L'invention concerne un procédé de réalisation d'une installation de conversion d'énergie électrique de puissance, comprenant les étapes suivantes :
- fournir au moins un premier élément fonctionnel dans un premier contenant,
- disposer le premier contenant,
- fournir au moins un deuxième élément fonctionnel dans un deuxième contenant,
- disposer le deuxième contenant relativement au premier contenant,
- interfacer les au moins premier et deuxième contenants.

De préférence, le premier élément fonctionnel est d'un premier type.

Avantageusement, le premier élément fonctionnel comprend au moins un convertisseur de fréquence.

De préférence, le deuxième élément fonctionnel est d'un deuxième type.

Avantageusement, le deuxième élément fonctionnel comprend un convertisseur de tension, et/ou au moins un tableau moyenne tension.

De préférence, le deuxième élément fonctionnel comprend au moins un tableau basse tension.

De préférence, les premier et deuxième contenants ont les mêmes dimensions et/ou les mêmes positions de points d'ancrage et/ou les mêmes masses, voire sont identiques et/ou le premier contenant comprend une première face et le deuxième contenant comprend une deuxième face, les première et deuxième faces étant adaptées pour coopérer l'une avec l'autre.

De préférence, les premier et deuxième contenants sont des conteneurs normalisés.

Une installation de conversion d'énergie électrique de puissance selon l'invention est obtenue par la mise en oeuvre du procédé de réalisation tel que défini ci dessus.

De préférence, l'installation comprend au moins un premier élément fonctionnel dans un premier contenant, au moins un deuxième élément fonctionnel dans un deuxième contenant et un moyen d'interfaçage des au moins premier et deuxième contenants.

Avantageusement, une puissance installée peut être modulée à tout moment en modifiant le nombre d'unité de conversion mises en parallèle et en ajoutant au moins un contenant.

### BREVE DESCRIPTION DES DESSINS

Les dessins annexés représentent, à titre d'exemple, un mode de réalisation d'une installation selon l'invention.
La figure 1 est un schéma électrique d'un mode de réalisation d'une installation selon l'invention.
La figure 2 est un schéma électrique fonctionnel d'un premier mode de réalisation d'une installation selon l'invention.
La figure 3 est une première illustration représentant le principe d'assemblage d'éléments fonctionnels.
La figure 4 est un schéma électrique fonctionnel d'un deuxième mode de réalisation d'une installation selon l'invention.
La figure 5 est une deuxième illustration représentant le principe d'assemblage d'éléments fonctionnels.
La figure 6 est une troisième illustration représentant le principe d'assemblage d'éléments fonctionnels.
La figure 7 est un tableau illustrant les différents éléments fonctionnels nécessaires à la réalisation d'une installation de conversion en fonction de la puissance de cette installation de conversion.

### DESCRIPTION DETAILLEE DE MODES DE REALISATION PREFERES

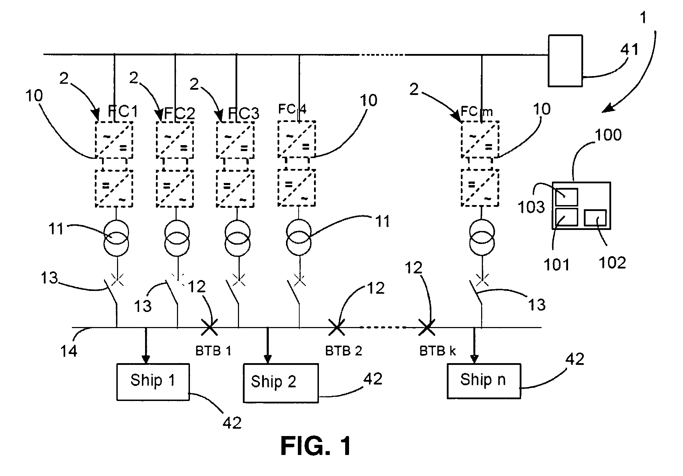

Un mode de réalisation d'une installation selon l'invention est décrit ci-après en référence à la figure 1.

L'installation 1 permet de convertir un première tension électrique de puissance d'entrée de l'installation en un deuxième tension électrique de puissance de sortie de l'installation. La première tension électrique est fournie par un premier réseau électrique 41, notamment un réseau électrique commercial. La deuxième tension électrique est destinée à alimenter un ou plusieurs deuxièmes réseaux électriques 42 comprenant des équipements électriques, comme des réseaux électriques équipant des navires.

Par exemple, le réseau électrique 41, fournit une première source de moyenne ou basse tension. Cette tension d'entrée est convertie en une tension de sortie de fréquence et/ou de tension différente grâce à un convertisseur 2 comprenant un élément 10 de conversion de fréquence et/ou un élément 11 de conversion de tension (dans le cas ou la tension du deuxième réseau électrique 42 est égale à la tension de sortie de convertisseur 2 l'élément 11 de conversion de tension ne s'utilise pas). En sortie du convertisseur, on obtient une source d'énergie électrique de tension et de fréquence adaptées au deuxième réseau électrique 42.

En aval des convertisseurs, des interrupteurs commandés 13 permettent de relier à des conducteurs 14 de distribution d'énergie électrique ou d'isoler chaque convertisseur de ces conducteurs.

Les deuxièmes réseaux électriques sont raccordés chacun en un différent point des conducteurs de distribution. Par ailleurs, les conducteurs de distribution présentent des interrupteurs commandés 12 permettant d'isoler des segments de ces conducteurs. Il s'ensuit que, selon les états des interrupteurs commandés 13 et 12, un deuxième réseau électrique 42 peut n'être raccordé qu'à un segment des conducteurs de distribution 14 et peut en outre n'être raccordé qu'à une partie des convertisseurs 2 susceptibles d'être raccordés à ce segment du conducteur de distribution. En variante, les interrupteurs commandés 12 ne sont pas et le/(les) deuxième réseau électrique 42 peut être raccordé à l'ensemble des conducteurs de distribution 14.

Une unité de commande 100 permet la commande des interrupteurs commandés 13 et 12.

On appelle élément fonctionnel, un regroupement d'appareillage électrique assurant une fonction définie de l'installation de conversion. De préférence, l'élément fonctionnel est contenu dans un contenant comme un conteneur au format standard (dimension, poids, position des points d'ancrages...) entièrement équipé et câblé en atelier/usine. Son format permet d'être très facilement transporté puis installé sur site avec les engins de levage classiques disponibles sur les ports, notamment les ports marchands. Seules les interfaces, réduites au minimum, restent à effectuer sur site. La solution est ensuite très rapidement mise en service car chaque élément fonctionnel est qualifié seul et associé aux autres.

De préférence, on utilise trois types d'éléments fonctionnels :
- conversion de fréquence ;
- distribution et protection ;
- tableau moyenne tension.

Chaque élément fonctionnel a une architecture standard, mais afin de répondre à toutes les demandes, elle présente des variantes en termes de matériel embarqué principalement. Ces variantes sont cependant assez proche les unes des autres pour avoir une base commune. L'élément fonctionnel de type tableau moyenne tension est adapté pour recevoir tout le matériel nécessaire à l'installation mais il doit être configuré en fonction des besoins.

Par exemple, pour couvrir une gamme complète, on peut estimer que trois types d'éléments fonctionnels sont nécessaires.

De préférence, chaque élément fonctionnel est contenu dans un conteneur classique, empilable, aussi bien pour le transport que pour l'installation. On estime par exemple qu'il est raisonnable d'empiler trois conteneurs. Au-delà des problèmes de maintenance pourraient apparaitre, notamment des problèmes d'extraction des transformateurs.

Pour des installations nécessitant un seul niveau de fréquence (pas de conversion de fréquence), l'installation électrique est simple. On utilise plusieurs éléments fonctionnels de type tableau moyenne tension, pour réaliser les différents niveaux de distribution d'énergie de l'installation. Ces éléments fonctionnels peuvent être inclus dans autant de contenants.

Pour des installations devant assurer une conversion de tension, notamment devant fournir deux valeurs de fréquence définies, on utilise des éléments fonctionnels de type convertisseur de fréquence, que l'on groupe avec tout autre élément fonctionnel nécessaire pour réaliser une unité de conversion. Afin d'être autonome, chaque unité de conversion embarque le matériel nécessaire à son fonctionnement, par exemple :
- un disjoncteur de protection, et/ou
- un transformateur abaisseur, et/ou
- un transformateur élévateur, et/ou
- un convertisseur de fréquence.

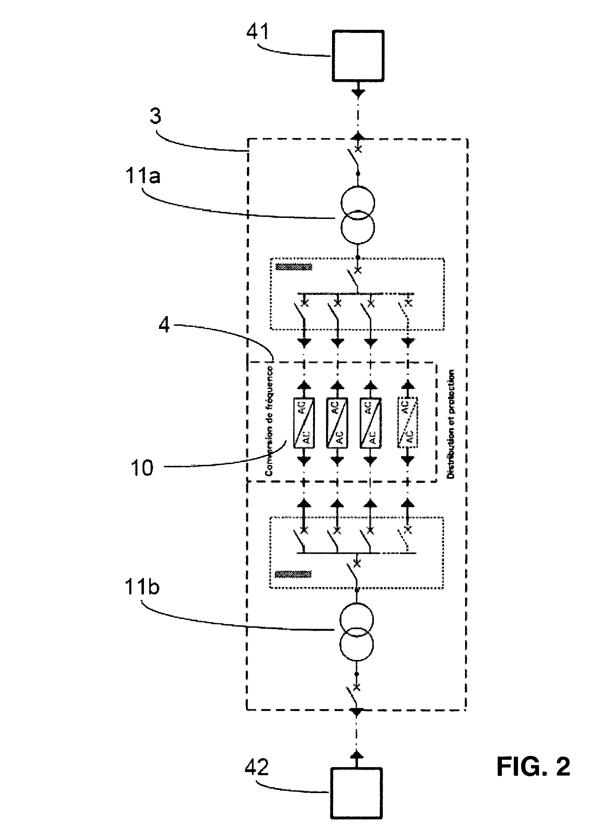

A titre d'exemple, on décrit ci-après, en référence à la figure 2, un exemple de réalisation d'une installation de conversion 1.

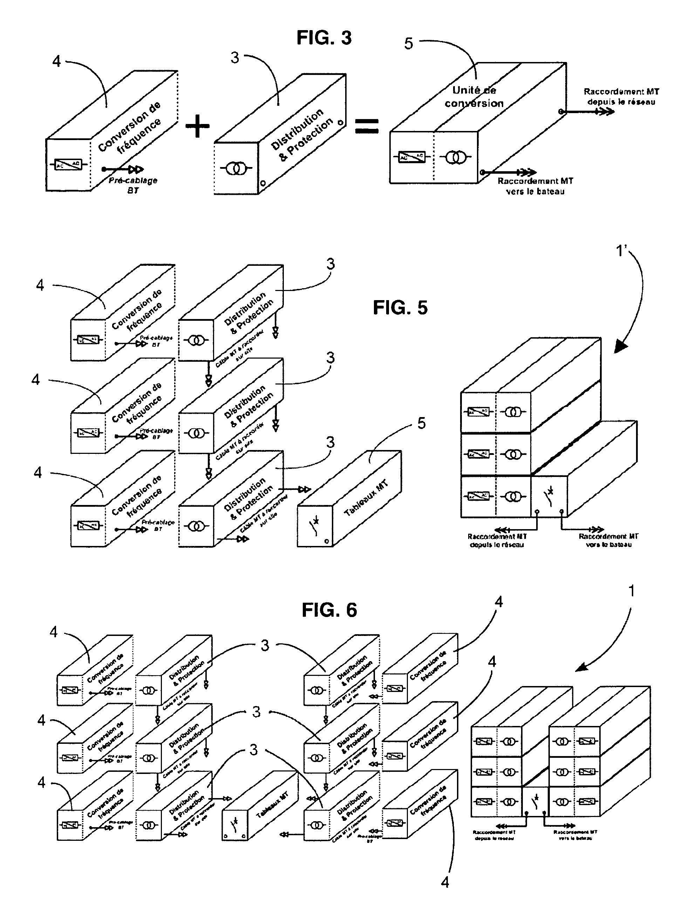

L'installation 1 comprend principalement un ensemble de convertisseur de fréquence basse tension 10 d'une quantité variable en fonction du besoin, un convertisseur de tension moyenne tension - basse tension 11 a en amont du convertisseur de fréquence et un convertisseur de tension basse tension - moyenne tension 11 b en aval du convertisseur de fréquence. Des disjoncteurs sont prévus entre le convertisseur de fréquence et les convertisseurs de tension. De même, des disjoncteurs sont prévus entre le premier réseau et le convertisseur abaisseur de tension et entre le deuxième réseau et le convertisseur élévateur de tension. Comme représenté à la figure 3, l'ensemble des convertisseurs de fréquence est disposé dans un premier contenant 4, comme un conteneur. Les convertisseurs de tension (élévateur et abaisseur) et les disjoncteurs sont disposés dans un deuxième contenant 3, comme un conteneur. De préférence, le premier et le deuxième contenants ont les mêmes dimensions ou des dimensions compatibles, par exemple chacun présente une face, les faces ayant les mêmes dimensions et étant destinées à être assemblées l'une à l'autre.

L'installation de conversion est donc constituée de deux contenants incluant les différents éléments fonctionnels, notamment un élément fonctionnel de conversion de fréquence et un élément fonctionnel de conversion de tension et de protection et de tableau moyenne tension. Ainsi, il est possible de répondre au besoin d'un quai accueillant des navires ayant des réseaux de fréquence 50 ou 60Hz avec une puissance limitée à la puissance d'une unité de conversion.

En variante, en fonction de l'architecture électrique souhaitée, le tableau moyenne tension comprenant des conducteurs et des disjoncteurs peut être disposé dans un autre contenant 50 différent des contenants 4, 3.

Afin de pouvoir alimenter des infrastructures avec des puissances plus importantes, plusieurs unités de conversion indépendantes peuvent fonctionner en parallèle pour réaliser une installation de conversion. Pour ce faire, une interface électrique est réalisée par des câbles moyenne tension de faible section, facilement manipulables. Des réservations sont d'ailleurs prévues pour les acheminer entre les contenants. Dans ce cas les tableaux moyenne tension sont disposés dans un contenant 5.

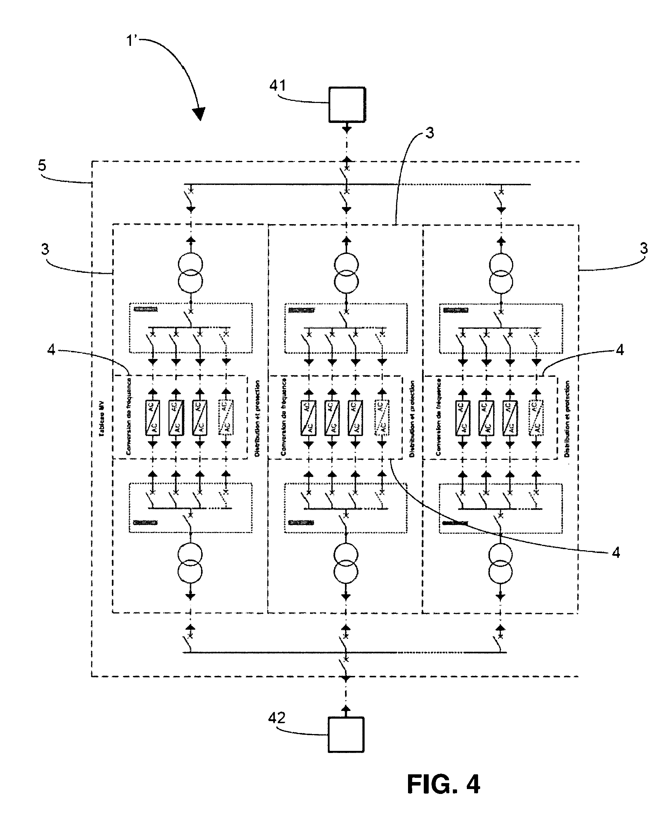

A titre d'exemple, on décrit ci-après, en référence à la figure 4, un autre exemple de réalisation d'une installation de conversion 1' d'une puissance équivalente à trois unités de conversion.

Dans cet exemple, l'installation 1' comprend principalement trois ensembles de convertisseurs de fréquence basse tension 10, trois convertisseurs de tension moyenne tension - basse tension en amont des convertisseurs de fréquence et trois convertisseurs de tension basse tension - moyenne tension en aval des convertisseurs de fréquence. Comme représenté à la figure 5, Chaque ensemble de convertisseurs de fréquence est disposés dans un contenant différent 4 et un premier couple de convertisseurs abaisseur - élévateur et un deuxième couple de convertisseurs abaisseur - élévateur sont chacun disposés dans un contenant différent 3.. On retrouve ainsi trois unités de conversion identiques et indépendantes, dont l'ensemble du matériel est contenu dans 2 contenants 3 et 4.

Les tableaux moyenne tension amont et aval sont eux placés dans un contenant différent. Ce contenant peut accueillir l'ensemble du matériel moyenne tension pour l'ensemble des configurations souhaitées. En variante le tableau amont moyenne tension et le tableau aval moyenne tension peuvent être placés dans deux contenants différents 5.

Un exemple d'une installation de conversion 1" est représenté à la figure 6 en éclaté et en perspective. Cette installation de conversion est constituée de treize contenants disposés et câblés les uns par rapport aux autres. Six unités de conversion sont réalisées chacune par l'association, c'est-à-dire par le câblage d'un contenant incluant un élément de conversion de fréquence et d'un contenant incluant des éléments de conversion de tension et des éléments de distribution et de protection. Cette association de 6 unités de conversion permet de disposer d'une installation de conversion d'une puissance équivalente à 6 unités de conversion.

De préférence, certains contenants, notamment les contenants incluant les éléments de conversion de fréquence, sont toujours placés de façon à avoir une face directement accessible ou directement à l'air libre. Cela est nécessaire compte tenu de l'architecture interne de ces contenants en termes de ventilation et/ou de climatisation.

Au final, on obtient sur la base de contenants adaptés les uns aux autres, notamment de contenants standardisés ou uniformisés et incluant des composants fonctionnels une véritable solution modulaire qui permet de réaliser de manière simple et économique des installations de conversion répondant à diverses contraintes, notamment à diverses contraintes de puissance.

Dans un mode d'exécution du procédé de réalisation selon l'invention, on réalise une installation 1, 1',1" de conversion d'énergie électrique de puissance en effectuant les étapes suivantes.

Dans une première étape, on fournit au moins un premier élément fonctionnel 10 dans un premier contenant 4. Le contenant sert avantageusement au transport de l'au moins un premier élément fonctionnel jusque sur le site de réalisation de l'installation de conversion.

Dans une deuxième étape, on dispose le premier contenant et donc l'au moins un premier élément fonctionnel sur le site. Là encore, le premier contenant sert avantageusement pour la mise en place de l'au moins un premier élément fonctionnel. Le premier contenant comprend par exemple des moyens d'accrochage destinés à coopérer avec un moyen de levage. Dans cette étape, le premier contenant est fixé ou scellé au sol.

Dans une troisième étape, on fournit au moins un deuxième élément fonctionnel 11 dans un deuxième contenant 3. Le contenant sert avantageusement au transport de l'au moins un deuxième élément fonctionnel jusque sur le site de réalisation de l'installation de conversion.

Dans une quatrième étape, on dispose le deuxième contenant relativement au premier contenant. On dispose ainsi le deuxième élément fonctionnel sur le site. Là encore, le deuxième contenant sert avantageusement pour la mise en place de l'au moins un deuxième élément fonctionnel. Le deuxième contenant comprend par exemple des moyens d'accrochage destinés à coopérer avec un moyen de levage. Dans cette étape, le deuxième contenant est fixé ou scellé au sol. Alternativement, il peut être fixé sur le premier contenant, voire sur un autre contenant de l'installation. Les contenants peuvent ainsi être empilés les uns sur les autres.

Dans une cinquième étape, on interface les au moins premier et deuxième contenants, c'est-à-dire qu'on relie électriquement les premier et deuxième contenants. Ainsi, on relie électriquement les éléments fonctionnels inclus dans les premier et deuxième contenants.

Comme vu précédemment, le premier élément fonctionnel peut être d'un premier type, notamment comprendre un convertisseur de fréquence.

Comme vu précédemment, le deuxième élément fonctionnel peut être d'un deuxième type, notamment comprendre un convertisseur de tension et/ou un tableau moyenne tension.

Les premier et deuxième contenants ont de préférence les mêmes dimensions et/ou les mêmes positions de points d'ancrage et/ou les mêmes masses, voire sont identiques. Ils peuvent notamment consister en des conteneurs normalisés.

De plus, une telle installation est évolutive : si l'on souhaite augmenter la capacité de l'installation de conversion, il suffit de rajouter un ou plusieurs contenants incluant les éléments fonctionnels à ceux déjà existants dans l'installation. Ce ou ces contenants sont ajoutés aux autres exactement sur le même principe qu'au moment de la première réalisation sans qu'ils n'interfèrent avec ceux déjà présents. Seul le tableau moyenne tension, lui aussi modulaire, peut être impacté par l'ajout d'un nouveau contenant, à moins que le tableau ait été prévu pour, lors de la première réalisation.

De la même manière, si l'on souhaite diminuer la capacité de l'installation de conversion, il suffit de retirer un ou plusieurs contenants incluant des éléments fonctionnels de l'installation. Ces contenants peuvent ensuite être réutilisés dans une autre installation de conversion.

On obtient ainsi une solution facile, rapide à installer, modulaire et évolutive. La standardisation de la solution permet aussi de globaliser les temps d'étude. Enfin, chaque contenant est optimisé et sa mise en service est simplifiée. Tous ces gains vont donc se traduire en termes de coût sur la solution globale.

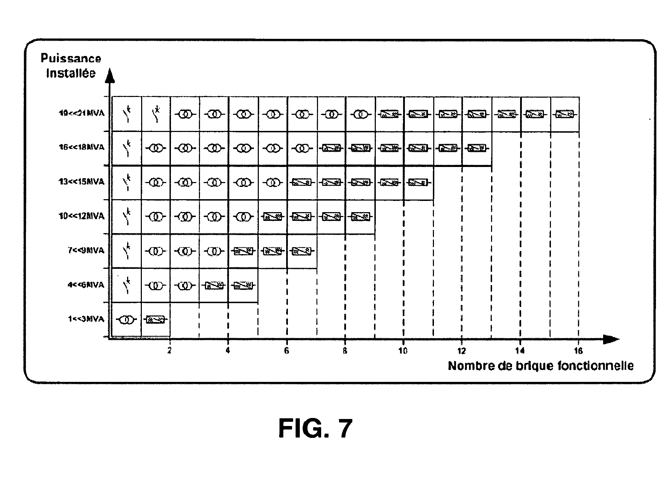

On a représenté, sur le graphique de la figure 7, les possibilités de réalisation d'installations de conversion à partir de contenants incluant :
- un convertisseur de fréquence, ou
- des convertisseurs de tension d'une puissance de 3MVA, ou
- des tableaux moyenne tension.

Outre les avantages suivants déjà mentionnés :
- facilité et rapidité d'installation ;
- modularité et évolutivité,

Le procédé selon l'invention permet :
- d'augmenter le niveau de redondance;
- de réduire les coûts.

## Revendications

1. Procédé de réalisation d'une installation (1 ; 1' ; 1") de conversion d'énergie électrique de puissance, comprenant les étapes suivantes :
- fournir au moins un premier élément fonctionnel (10) dans un premier contenant (4), ledit premier élément fonctionnel comprenant au moins un convertisseur de fréquence (10),
- disposer le premier contenant,
- fournir au moins un deuxième élément fonctionnel (11) dans un deuxième contenant (3 ;3'), ledit deuxième élément fonctionnel comprenant au moins un tableau moyenne tension,
- disposer le deuxième contenant relativement au premier contenant,
- interfacer les au moins premier et deuxième contenants.

2. Procédé de réalisation selon la revendication 1, **caractérisé en ce que** le premier élément fonctionnel est d'un premier type.

3. Procédé de réalisation selon l'une des revendications 1 ou 2, **caractérisé en ce que** le deuxième élément fonctionnel est d'un deuxième type.

4. Procédé de réalisation selon l'une des revendications 1 à 3, **caractérisé en ce que** le deuxième élément fonctionnel comprend un convertisseur de tension (11a ; 11 b).

5. Procédé de réalisation selon la revendication 4, **caractérisé en ce que** le deuxième élément fonctionnel comprend au moins un tableau basse tension.

6. Procédé de réalisation selon l'une des revendications précédentes, **caractérisé en ce que** les premier et deuxième contenants ont les mêmes dimensions et/ou les mêmes positions de points d'ancrage et/ou les mêmes masses, voire sont identiques et/ou le premier contenant comprend une première face et le deuxième contenant comprend une deuxième face, les première et deuxième faces étant adaptées pour coopérer l'une avec l'autre.

7. Procédé de réalisation selon l'une des revendications précédentes, **caractérisé en ce que** les premier et deuxième contenants sont des conteneurs normalisés.

8. Installation (1 ; 1' ; 1 ") de conversion d'énergie électrique de puissance obtenue par la mise en oeuvre du procédé de réalisation selon l'une des revendications précédentes.

9. Installation de conversion selon la revendication précédente, **caractérisée en ce qu'**elle comprend au moins un premier élément fonctionnel (10) dans un premier contenant (4), au moins un deuxième élément fonctionnel (11) dans un deuxième contenant (3) et un moyen d'interfaçage des au moins premier et deuxième contenants.

10. Installation de conversion selon l'une des revendications 8 ou 9, **caractérisée en ce que** la puissance installée peut être modulée à tout moment en modifiant le nombre d'unité de conversion mises en parallèle et en ajoutant au moins un contenant (50) comprenant un tableau moyenne tension,
ladite unité de conversion comprenant au moins au moins un premier élément fonctionnel et au moins un deuxième élément fonctionnel
